# EUROPÄISCHE PATENTANMELDUNG

(11) **EP 4 494 914 A1**
(43) Veröffentlichungstag der Anmeldung: **22.01.2025**
(21) Anmeldenummer: 23185966.1
(22) Anmeldetag: 17.07.2023
(51) Int. Cl.: B60L 50/60, G08G 1/00

(54) **SYSTEM UNIVERSELLER MOBILER EINHEITEN, VERFAHREN ZU DESSEN REGELUNG SOWIE VERFAHREN ZUR VERSORGUNG EINER INFRASTRUKTUR**

(71) Anmelder: Höllwart, Johann, 8042 Graz (AT)
(72) Erfinder: Höllwart, Johann, 8042 Graz (AT)
(74) Vertreter: Schardmüller Gall-Schuhmann Patentanwälte OG

(57) **Zusammenfassung**

Die Erfindung betrifft ein System umfassend zumindest ein erstes Fahrzeug, insbesondere ein straßentaugliches und/oder geländegängiges Land-, ein Wasser- oder ein Luftfahrzeug, welches erste Fahrzeug zumindest einen ersten elektrischen Antrieb und eine Kommunikationseinrichtung umfasst, sowie zumindest eine mobile Einheit, vorzugsweise mehrere mobile Einheiten, wobei die mobilen Einheiten jeweils einen zweiten elektrischen Antrieb sowie einen Energiespeicher zur Versorgung des zweiten elektrischen Antriebs (mit elektrischer Energie) umfassen, und wobei die Kommunikationseinrichtung zumindest dazu eingerichtet ist, Informationen betreffend einen individuellen Zielort an die mobilen Einheiten zu übertragen, und wobei die mobilen Einheiten dazu eingerichtet sind, den individuellen Zielort selbstständig zu erreichen.

## Beschreibung

### Gebiet der Erfindung

Die vorliegende Erfindung betrifft zunächst ein System umfassend zumindest ein erstes Fahrzeug, insbesondere ein Land-, Wasser- oder Luftfahrzeug, welches erste Fahrzeug einen ersten elektrischen Antrieb umfasst und für den Transport von mobilen Einheiten ausgebildet ist, sowie mehrere mobile Einheiten, welche mobilen Einheiten dazu ausgebildet sind, mittels des ersten Fahrzeugs transportiert zu werden.

Ferner betrifft die Erfindung ein System umfassend zumindest ein erstes Gebäude mit zumindest einer Kommunikationseinrichtung sowie mehrere mobile Einheiten, welche mobilen Einheiten dazu eingerichtet sind, über die Kommunikationseinrichtung gesteuert zu werden.

Darüber hinaus betrifft die Erfindung ein Verfahren zur Versorgung einer Infrastruktur unter Verwendung des erfindungsgemäßen Systems sowie ein Verfahren zur Regelung eines Speicherstandes der mobilen Einheiten des erfindungsgemäßen Systems.

### Stand der Technik

Elektromobilität gewinnt derzeit immer mehr an Bedeutung. Nicht nur im Individual- und öffentlichen Verkehr, sondern auch im Güterverkehr wird vermehrt versucht, konventionelle Verbrennungsmotoren durch elektrische Antriebe zu ersetzen. Die zur Versorgung der elektrischen Antriebe erforderlichen Energiespeicher sind aber nicht nur teuer, sondern führen auch zu einer drastischen Erhöhung des Leergewichts des jeweiligen Fahrzeugs, insbesondere dann, wenn größere Akku-Kapazitäten für die Zurücklegung weiter Strecken und/oder den Transport hoher Lasten verfügbar sein sollen. Dies führt dazu, dass die - auf eine bestimmte maximale Reichweite/Last ausgelegten - Elektrofahrzeuge für viele Anwendungen überdimensioniert sind.

Darüber hinaus sind derartige Elektrofahrzeuge oftmals zu groß, um im städtischen oder ländlichen Bereich für die Lieferung der transportierten Güter an die Endempfänger, wie etwa Haushalte oder Geschäfte, eingesetzt zu werden. Nach dem Überlandtransport müssen die transportierten Güter daher in der Regel auf kleinere Transporteinheiten umgeladen werden. Dabei setzen sowohl der Umladevorgang als auch die Belieferung der Endempfänger mittels der kleineren Transporteinheiten, etwa kleinere LKW, zusätzliche menschliche Arbeitskräfte voraus.

Außerdem nimmt die heutige Logistik einen enorm großen Anteil an Leerfahren und Leerkilometern im Güterverkehr in Kauf. Laut Eurostat waren beispielsweise rund ein Fünftel der 2021 in der Europäischen Union geleisteten Transportarbeit auf der Straße Leerfahrten. Zwar lässt sich die damit einhergehende Umweltbelastung durch den Einsatz von Elektrofahrzeugen reduzieren; allerdings führen gerade die hohen Gewichte der benötigten Energiespeicher auch in diesem Fall zu einem unnötig hohen Energieverbrauch.

Auch der Mangel an LKW-Fahrern, der in den letzten Jahren bereits zu beträchtlichen Herausforderungen in den konventionellen Lieferketten geführt hat, wird sich durch den Einsatz von Elektrofahrzeugen allein nicht beseitigen lassen. Im Gegenteil ist zu befürchten, dass die immer komplexer und kleingliedriger gestalteten Lieferketten zu einem noch höheren Bedarf an Fahrern und Logistikarbeitern führen werden. Bestrebungen, den Gütertransport großflächig zu automatisieren, stellen sich in der Praxis bisher als wenig erfolgreich heraus - nicht zuletzt aufgrund rechtlicher, aber auch technischer Probleme.

### Aufgabe der Erfindung

Die vorliegende Erfindung stellt sich daher unter anderem die Aufgabe, die angesprochenen Nachteile des Standes der Technik zu vermeiden. Insbesondere soll eine Alternative zu derzeitigen Transportmitteln für den Güterverkehr geschaffen werden, die flexibel an unterschiedlichste Anforderungsprofile, etwa hinsichtlich Transportweg, Beladung, Funktionalität, Straßenverhältnisse oder lokale Gegebenheiten, angepasst werden kann.

Weiters soll es möglich sein, Leerfahren zu reduzieren oder gänzlich zu vermeiden, die Anzahl der erforderlichen menschlichen Arbeitskräfte zu verringern und eine Lieferung von Gütern auch an Empfänger in schwer zugänglichen städtischen bzw. schlecht erschlossenen ländlichen Gebieten zu ermöglichen bzw. zu vereinfachen. Zudem soll es möglich sein, die zum Gütertransport bzw. für deren Zustellung an den jeweiligen Empfänger verwendeten Transportmittel vielseitig einzusetzen und Synergien mit vorhandenen Infrastrukturen der Empfänger zu nutzen.

Weitere Aufgaben der Erfindung ergeben sich aus nachfolgender Beschreibung.

### Darstellung der Erfindung

Eine Aufgabe der Erfindung wird gelöst durch ein System umfassend zumindest ein erstes Fahrzeug, insbesondere ein straßentaugliches und/oder geländegängiges Land-, ein Wasser- oder ein Luftfahrzeug, welches erste Fahrzeug zumindest einen ersten elektrischen Antrieb und eine Kommunikationseinrichtung umfasst, sowie zumindest eine mobile Einheit, vorzugsweise mehrere mobile Einheiten, wobei die mobilen Einheiten jeweils einen zweiten elektrischen Antrieb sowie einen Energiespeicher zur Versorgung des zweiten elektrischen Antriebs (mit elektrischer Energie) umfassen, und wobei die Kommunikationseinrichtung zumindest dazu eingerichtet ist, Informationen betreffend einen individuellen Zielort an die mobilen Einheiten zu übertragen, und wobei die mobilen Einheiten dazu eingerichtet sind, den individuellen Zielort selbstständig zu erreichen.

"Selbstständig" bedeutet hierbei, dass sich die mobilen Einheiten ohne externe Krafteinwirkung (etwa Zug- oder Schubkräfte, die durch ein Zug- oder Schubfahrzeug aufgebracht werden müssten) an den jeweiligen individuellen Zielort bewegen können. Dies kann beispielsweise durch Ansteuerung der durch die Kommunikationseinrichtung übertragenen (GPS-) Koordinaten mittels des zweiten elektrischen Antriebs unter Zuhilfenahme technischer Mittel zur Ermöglichung des autonomen Fahrens (etwa Sensoren und Navigationssoftware) erfolgen. Dabei können die individuellen Zielorte, an die sich die mobilen Einheiten selbstständig bewegen sollen, durchaus mehrere Kilometer, beispielsweise mehr als einen, fünf, 10, 20, 30, 40, 50, 60, 70, 80, 90 oder 100 km, von dem entsprechenden Zielort des ersten Fahrzeugs, an welchen ersten Zielort das erste Fahrzeug die mobilen Einheiten transportieren soll, entfernt sein.

Dadurch ist ein System geschaffen, das Logistik- und Versorgungsaufgaben deutlicher flexibler, rascher und energieeffizienter bewerkstelligen kann als bisher. Dies wird insbesondere durch eine Parallelisierung und Automatisierung der zur Versorgung mehrerer Infrastruktureinrichtungen abzuarbeitenden Wege erzielt. Das System aus erstem Fahrzeug und zumindest einer, im Regelfall aber mehreren mobilen Einheiten kann aufgrund der in den mobilen Einheiten vorgesehenen Energiespeicher zunächst mit derjenigen (elektrischen) Energie ausgestattet sein, die es für die Erfüllung der jeweiligen Aufträge benötigt. Zudem können die mobilen Einheiten, wie weiter unten ausführlich beschrieben, für unterschiedlichste Zwecke ausgebildet sein bzw. verwendet werden, etwa für den Transport von Gütern oder Gerätschaften. Darüber hinaus kann zumindest das erste Fahrzeug - vorzugsweise aber auch jede der mobilen Einheiten - in ein Kommunikationsnetz eingebunden sein, um mit anderen erfindungsgemäßen Systemen, mit ersten Fahrzeugen und/oder anderen mobilen Einheiten anderer erfindungsgemäßer Systeme und/oder mit externen Einrichtungen Informationen auszutauschen. Hierzu umfasst zumindest das erste Fahrzeug, vorzugsweise aber auch die mobilen Einheiten, eine Kommunikationseinrichtung.

Innerhalb des Systems dient diese Kommunikationseinrichtung dazu, Informationen über den jeweiligen individuellen Zielort einer bestimmten mobilen Einheit an diese mobile Einheit zu übertragen; die mobile Einheit ist, insbesondere aufgrund ihres eigenen zweiten elektrischen Antriebs, in der Lage, sich auf Grundlage der ihr übermittelten Informationen an ihren jeweiligen individuellen Zielort zu bewegen. Dies kann unabhängig vom ersten Fahrzeug erfolgen - beispielsweise kann das erste Fahrzeug also dazu genutzt werden, die mobilen Einheiten an einen (ersten) Zielort zu transportieren oder zu begleiten, von wo aus die mobilen Einheiten mittels der Kommunikationseinrichtung an individuelle Zielorte geschickt werden können, an welchen individuellen Zielorten die mobilen Einheiten die ihnen zugedachten Aufgaben erledigen können, etwa die Versorgung einer Infrastruktureinrichtung mit Gütern, Gerätschaften und/oder Energie.

Durch die Kommunikationseinrichtung wird es möglich, das erfindungsgemäße System als Teil einer, beispielsweise KI-gestützten, Schwarmintelligenz zu betreiben, über welche Schwarmintelligenz (dezentrale) Entscheidungen betreffend die von dem System zu erfüllenden Aufgaben, die vom ersten Fahrzeug anzusteuernden Zielorte sowie die individuellen Zielorte der einzelnen mobilen Einheiten getroffen werden können. Gleichzeitig wird es aber auch möglich, dass die mobilen Einheiten Informationen über die Kommunikationseinrichtung an das erste Fahrzeug übermitteln, etwa betreffend deren Beladung (beispielsweise mit Gütern oder Gerätschaften) und/oder deren Energiereserven. Diese Informationen können vom ersten Fahrzeug zur Optimierung verschiedener Parameter genutzt werden; beispielsweise können Energiereserven der mobilen Einheiten während des Transports der mobilen Einheiten an den ersten Zielort zur Versorgung des ersten elektrischen Antriebs des ersten Fahrzeugs eingesetzt werden, können die Energiespeicher bestimmter mobiler Einheiten vor Erreichen des ersten Zielorts gezielt ge- oder entladen werden, usw. Das erste Fahrzeug kann somit eine koordinierende Rolle für die mobilen Einheiten übernehmen, und zwar sowohl während die mobilen Einheiten mittels des ersten Fahrzeugs an den ersten Zielort transportiert bzw. an den ersten Zielort begleitet werden, als auch während einer Phase, in der sich die mobilen Einheiten zu den entfernt von dem ersten Fahrzeug gelegenen individuellen Zielorten bewegen.

Das erfindungsgemäße System zeichnet sich also unter anderem dadurch aus, dass Ressourcen (etwa Energie und Güter) durch qualifizierte Entscheidungen (über die Einbettung des Systems in Kommunikationsnetze bzw. Schwarmintelligenz) optimal verwaltet, auf die mobilen Einheiten des jeweiligen Systems und/oder auf unterschiedliche erfindungsgemäße Systeme aufgeteilt und an die jeweils zu versorgenden Infrastruktureinrichtungen verteilt werden können. Das System schafft somit optimale Voraussetzungen für einen dezentralen Güter-, Energie- und Wissenstransfer und ermöglicht dabei die Einbeziehung verschiedenster Informationen, etwa über aktuelles Verkehrsaufkommen, Echtzeitwetter, den Versorgungsbedarf einzelner Infrastruktureinrichtungen, etc. Somit eignet sich das erfindungsgemäße System hervorragend für die Makro- und Mikrologistik, insbesondere zur Versorgung urbaner, suburbaner und ruraler Gebiete bzw. Infrastruktureinrichtungen.

Gemäß einer bevorzugten Ausführungsform des erfindungsgemäßen Systems ist das erste Fahrzeug für den Transport von mobilen Einheiten ausgebildet und sind die mobilen Einheiten dazu ausgebildet sind, mittels des ersten Fahrzeugs transportiert zu werden, wobei zumindest eine der mobilen Einheiten derart mit dem ersten Fahrzeug verbunden ist, dass eine Versorgung des ersten elektrischen Antriebs mit Energie durch den Energiespeicher der zumindest einen mobilen Einheit ermöglicht ist. Hierzu kann das erste Fahrzeug über eine Schnittstelle zur Herstellung einer Verbindung mit der zumindest einen und ggf. auch weiteren mobilen Einheiten verfügen.

Die mobilen Einheiten können grundsätzlich zum Transport von Gütern und/oder Personen eingerichtet sein und/oder andere Funktionen erfüllen, verfügen dabei aber jedenfalls über einen eigenständigen Antrieb und können sich somit unabhängig vom ersten Fahrzeug des Systems bewegen. Die mobilen Einheiten können somit als unabhängige Multifunktionsplattformen genutzt werden, was weiter unten noch detailliert beschrieben ist. Zur Versorgung der jeweiligen eigenen Antriebe, die hier als zweite Antriebe bezeichnet werden und eine geringere Leistung als der erste elektrische Antrieb des ersten Fahrzeugs aufweisen können, umfassen die mobilen Einheiten jeweils einen eigenen Energiespeicher. Die Leistung der zweiten Antriebe kann aber auch (annähernd) gleich oder höher als die Leistung des ersten Antriebs sein. Wesentlich ist nun, dass in einem der Betriebszustände des erfindungsgemäßen Systems zumindest eine der mobilen Einheiten derart mit dem ersten Fahrzeug verbunden ist, dass der Antrieb des ersten Fahrzeugs, also der erste Antrieb, durch den Energiespeicher dieser mobilen Einheit mit Energie versorg wird. Somit benötigt das erste Fahrzeug selbst grundsätzlich keinen eigenen Energiespeicher zur Versorgung des ersten Antriebs; ein solcher kann aber selbstverständlich dennoch vorhanden sein, insbesondere zur Versorgung kritischer Komponenten oder zur Zurücklegung sehr kurzer Wegstrecken. Um die Nutzung der mobilen Einheiten, die beispielsweise ähnlich einem Anhänger ausgebildet und mit dem ersten Fahrzeug verbunden sein können, unabhängig von dem ersten Fahrzeug zu ermöglichen, ist es vorgesehen, dass die zumindest eine mobile Einheit lösbar mit dem ersten Fahrzeug verbunden sein kann. Dazu kann beispielsweise eine mechanische und/oder elektrische Verbindung hergestellt werden.

Durch das erfindungsgemäße System wird es möglich, das erste Fahrzeug, das zum Transport mehrerer mobiler Einheiten an einen oder mehrere Zielorte dient, für den Transport hoher Lasten über weite Strecken auszulegen. Insbesondere kann das erste Fahrzeug dementsprechend mit einem leistungsstarken ersten elektrischen Antrieb ausgestattet sein. Die Energie, die zum Betrieb des ersten Fahrzeugs erforderlich ist, hängt jedoch maßgeblich von der Anzahl der zu transportierenden mobilen Einheiten, dem Gewicht der auf den mobilen Einheiten befindlichen Güter, der bis zum Zielort der mobilen Einheiten zurückzulegenden Wegstrecke, den Gegebenheiten der zurückzulegenden Strecke sowie von anderen Faktoren ab. Der Energiebedarf variiert somit von Anwendungsfall zu Anwendungsfall erheblich. Erfindungsgemäß wird dieser Energiebedarf nun nicht durch einen im ersten Fahrzeug untergebrachten Energiespeicher gedeckt, sondern durch die Energiespeicher der mobilen Einheiten, die mittels des ersten Fahrzeugs transportiert werden. Dementsprechend kann das erste Fahrzeug in Abhängigkeit vom jeweiligen Anwendungsfall mit einer geeigneten Anzahl mobiler Einheiten ausgestattet bzw. verbunden werden, sodass jeweils genau die Menge an Energie zur Verfügung gestellt werden kann, die für den jeweiligen Anwendungsfall - etwa den Transport der auf den mobilen Einheiten gelagerten Güter an den jeweiligen Zielort - benötigt wird.

Die Versorgung des ersten Antriebs mit Energie kann dabei beispielsweise über eine, vorzugsweise kräfteübertragende, Kupplung zwischen erstem Fahrzeug und der zumindest einen mobilen Einheit sichergestellt werden, durch welche Kupplung eine elektrische Verbindung zwischen dem Energiespeicher der zumindest einen mobilen Einheit und dem ersten Antrieb des ersten Fahrzeugs hergestellt wird. Bevorzugt kann dabei aber auch eine Versorgung des Energiespeichers der mobilen Einheit durch das erste Fahrzeug, etwa durch eine Rekuperationsbremse des ersten Fahrzeugs, ermöglicht werden; der Energiespeicher der zumindest einen mobilen Einheit kann demnach wechselweise ge- und entladen werden.

Um im Sinne der vorliegenden Erfindung für den Transport von mobilen Einheiten ausgebildet zu sein, ist es bereits ausreichend, dass das erste Fahrzeug Mittel zur Herstellung einer Verbindung mit zumindest einer mobilen Einheit, beispielsweise eine Kupplung oder Anhängerkupplung, aufweist. Analoges gilt für die mobilen Einheiten, die dazu ausgebildet sein müssen, mittels des ersten Fahrzeugs transportiert zu werden. Dabei erfüllt eine mobile Einheit dieses Erfordernis insbesondere auch dann, wenn diese mobile Einheit Mittel zur Herstellung einer Verbindung mit der zumindest einen mobilen Einheit, die mit dem ersten Fahrzeug verbunden ist, aufweist.

Es ist aber grundsätzlich keine (kräfteübertragende) Verbindung zwischen dem ersten Fahrzeug und den mobilen Einheiten, oder zwischen den mobilen Einheiten untereinander, erforderlich, um vom "transportierbar" im Sinne der vorliegenden Erfindung sprechen zu können; denkbar ist beispielsweise auch, dass das erste Fahrzeug den mobilen Einheiten lediglich Steuerungsbefehle übermittelt, auf deren Basis die mobilen Einheiten dem ersten Fahrzeug folgen bzw. nachfahren (oder allgemeiner: auf deren Basis die mobilen Einheiten das erste Fahrzeug begleiten), um den Zielort zu erreichen, an welchen Zielort das erste Fahrzeug die mobilen Einheiten transportieren soll.

Bevorzugt kann vorgesehen sein, dass mehrere der mobilen Einheiten derart mit dem ersten Fahrzeug und/oder mit der zumindest einen mobilen Einheit verbunden sind, dass eine Versorgung des ersten elektrischen Antriebs mit Energie durch die Energiespeicher der mehreren mobilen Einheiten ermöglicht ist.

Dadurch wird die Flexibilität des Systems weiter erhöht. Insbesondere wird es möglich, einige der mittels des ersten Fahrzeugs transportierten mobilen Einheiten zwecks Versorgung des ersten Antriebs mit dem ersten Antrieb zu verbinden, während andere der transportierten mobilen Einheiten keine solche Verbindung zum ersten Fahrzeug aufweisen. Beispielsweise können mobile Einheiten, die zu einem späteren Zeitpunkt zur Versorgung eines anderen Fahrzeugs oder bestimmter Infrastruktureinrichtungen mit Energie vorgesehen sind, auf diese Weise transportiert werden. Dabei können diese mobilen Einheiten, beispielsweise kräfteübertragend, sehr wohl mit dem ersten Fahrzeug verbunden sein; jedoch ohne eine Energieversorgung des ersten Antriebs zu ermöglichen.

Bevorzugt kann vorgesehen sein, dass sämtliche der mobilen Einheiten derart mit dem ersten Fahrzeug verbunden sind, dass eine Versorgung des ersten elektrischen Antriebs mit Energie durch die Energiespeicher sämtlicher mobiler Einheiten ermöglicht ist.

In dieser bevorzugten Ausführungsform wird es möglich, die Güter mit hohem Gewicht über weite Strecken zu transportieren. Die mobilen Einheiten, die mittels des ersten Fahrzeugs transportiert werden, fungieren einerseits als Anhänger, auf denen die zu transportierenden Güter geladen sind, und andererseits als Batterieeinheiten des Systems, mit denen der erste Antrieb des ersten Fahrzeugs mit Energie versorgt werden kann. Auf diese Weise kann das System zum Transport hoher Lasten über weite und anspruchsvolle Strecken verwendet werden. Die Anzahl der mit dem ersten Fahrzeug verbundenen mobilen Einheiten kann dabei entsprechend dem für den Transport benötigten Energiebedarf gewählt werden.

In den oben beschriebenen Ausführungsformen des erfindungsgemäßen Systems ist es auch möglich, dass die Energiespeicher einzelner mobiler Einheiten während des Transports, also während das erste Fahrzeug und die mobilen Einheiten miteinander verbunden sind, durch das erste Fahrzeug, etwa eine Nutzbremse des ersten Fahrzeugs, und/oder durch andere mobile Einheiten, etwa die Energiespeicher der anderen mobilen Einheiten, geladen werden.

Die mobilen Einheiten, und vorzugsweise auch das erste Fahrzeug, sind bevorzugt allradgelenkt ausgeführt, um schwer zugängliche, verwinkelte und enge Zugangsstraßen und -wege leichter passieren zu können. Dadurch lassen sich die mobilen Einheiten noch besser zur Versorgung urbaner Gebiete einsetzen.

Bevorzugt kann vorgesehen sein, dass das erste Fahrzeug und/oder die mobilen Einheiten derart ausgebildet sind, dass die Verbindung zwischen den mobilen Einheiten und dem ersten Fahrzeug durch Positionieren der mobilen Einheiten in einer Transportposition in, an oder auf dem Fahrzeug hergestellt wird.

Auf diese Weise kann die Be- und Entladung des Fahrzeugs mit bzw. von mobilen Einheiten zeitsparend und einfach gestaltet werden. Beispielsweise können die mobilen Einheiten zum Zwecke deren Transports über weite Strecken, ähnlich einer Gruppe von Anhängern mit dem ersten Fahrzeug verbunden bzw. gekoppelt werden. Dabei kann die zumindest eine mobile Einheit mit dem ersten Fahrzeug und können alle weiteren mobilen Einheiten miteinander und mit der zumindest einen mobilen Einheit gekoppelt werden. Dadurch kann eine kräfteübertragende Verbindung zwischen den mobilen Einheiten und dem ersten Fahrzeug hergestellt und auch eine elektrische Verbindung zwischen den Energiespeichern der mobilen Einheiten und dem ersten Antrieb des ersten Fahrzeugs geschaffen werden. Die Herstellung der kräfteübertragenden Verbindung und der elektrischen Verbindung kann dabei zusammen erfolgen bzw. keiner zusätzlicher Arbeitsschritte bedürfen.

Analog kann dies auch durch Positionieren der mobilen Einheiten auf dem ersten Fahrzeug erfolgen, etwa wenn das erste Fahrzeug als Zug oder Eisenbahnwagen ausgebildet ist oder einen solchen umfasst, oder wenn das erste Fahrzeug als Schiff ausgebildet ist. Hierbei können die mobilen Einheiten derart in bzw. auf dem ersten Fahrzeug positioniert werden - aufgrund der zweiten Antriebe, mit denen jede der mobilen Einheiten ausgestattet sein kann, können sich die mobilen Einheiten eigenständig in oder auf dem Fahrzeug positionieren -, dass die (elektrische) Verbindung zwischen den mobilen Einheiten und dem ersten Fahrzeug in einer jeweiligen Parkposition kontaktlos hergestellt werden kann.

Bevorzugt kann vorgesehen sein, dass die mobilen Einheiten selbst durch zweite Fahrzeuge, insbesondere durch Land-, Wasser- oder Luftfahrzeuge, ausgebildet sind. Insbesondere kann es vorteilhaft sein, wenn die mobilen Einheiten als straßen- und geländetaugliche (vierrädrige) Fahrzeuge mit eigenem Antrieb (in Form des zweiten elektrischen Antriebs) ausgebildet sind. Alternativ oder zusätzlich können mobile Einheiten des Systems auch durch flugfähige (Fracht-) Drohnen oder Drohnenschiffe ausgebildet sein.

Dadurch wird es besonders einfach, die zu transportierenden Güter an deren Bestimmungsorte zu bringen, da nach Erreichen eines Zielortes die Verbindung zwischen den bzw. einigen der mobilen Einheiten und dem ersten Fahrzeug, das die mobilen Einheiten an den Zielort transportiert hat, getrennt werden kann und die auf den mobilen Einheiten gelagerten Güter mittels der mobilen Einheiten an deren endgültigen Bestimmungsort weitertransportiert werden können. Somit können auch Gebiete, die für das erste Fahrzeug nicht oder nur schwer erreichbar wären, problemlos und rasch beliefert werden.

Bevorzugt kann vorgesehen sein, dass die mobilen Einheiten unabhängig vom ersten Fahrzeug steuerbar, insbesondere fernsteuerbar, sind. Beispielsweise können die mobilen Einheiten selbstfahrend oder selbstfliegend ausgebildet sein, um beispielsweise anhand von GPS-Daten an den endgültigen Bestimmungsort navigieren zu können.

Somit wird es möglich, die mobilen Einheiten nach Erreichen des Zielortes des ersten Fahrzeuges an entfernt gelegene Bestimmungsorte zu navigieren. Beispielsweise kann das erste Fahrzeug die mobilen Einheiten in einen Eintrittsbereich einer Infrastruktur transportieren, von wo aus sich die mobilen Einheiten unabhängig voneinander und vom ersten Fahrzeug an individuelle Bestimmungsorte bewegen können. Dort können die mobilen Einheiten beispielsweise entladen werden und/oder andere Funktionen erfüllen, etwa den individuellen Bestimmungsort über den Energiespeicher mit elektrischer Energie versorgen. Das System dieser bevorzugten Ausführungsform zeichnet sich somit durch besondere Flexibilität hinsichtlich der Einsatzmöglichkeiten aus.

Bevorzugt kann vorgesehen sein, dass die mobilen Einheiten durch das erste Fahrzeug steuerbar, insbesondere fernsteuerbar, sind.

Dadurch kann das erste Fahrzeug, insbesondere nach Erreichen des Zielortes, an den das erste Fahrzeug die mobilen Einheiten transportiert hart, als (mobiles) Umschlagslager fungieren und können die mobilen Einheiten, gesteuert durch das erste Fahrzeug, sämtliche im Einzugsgebiet des Zielortes liegende Bestimmungsorte erreichen und versorgen. In dieser Ausführungsform bilden erstes Fahrzeug und die mobilen Einheiten eine Einheit aus, die unabhängig von äußeren Gegebenheiten betrieben werden kann.

Bevorzugt kann vorgesehen sein, dass die mobilen Einheiten durch selbstfahrende Fahrzeuge ausgebildet sind.

Dadurch kann das gesamte System mit nur einer menschlichen Arbeitskraft betrieben werden; neben einem Fahrer, der das erste Fahrzeug steuert, sind zur Steuerung der mobilen Einheiten nämlich keine weiteren Arbeitskräfte notwendig. Somit ist eine besonders kostengünstige Logistikeinheit geschaffen, mit der eine große Zahl an Bestimmungsorten personalschonend beliefert bzw. versorgt werden kann.

Bevorzugt kann vorgesehen sein, dass die zweiten elektrischen Antriebe der mobilen Einheiten jeweils zumindest einen Elektromotor umfassen und dass die Energiespeicher der mobilen Einheiten jeweils zumindest eine Batterie, insbesondere eine Sekundärbatterie (einen Akkumulator), umfassen. Auch der erste elektrische Antrieb des ersten Fahrzeugs kann zumindest einen Elektromotor umfassen.

Somit kann das System vollständig elektrisch und umweltschonend betrieben werden. Das Problem der Dimensionierung elektrischer Nutzfahrzeuge, das sich durch die zur Versorgung leistungsstarker Elektromotoren notwendigen, entsprechend großen, schweren und teuren Energiespeicher ergibt, kann vermieden werden, indem das System in Form der mobilen Einheiten mit modular einsetzbaren mobilen Energiespeichern in im Wesentlichen beliebiger Anzahl ausgestattet werden kann, welche Energiespeicher zugleich auch der Beförderung von Gütern dienen. Es wird somit möglich, das erste Fahrzeug für kurze Strecken und geringe Last mit einer geringen Anzahl, und für längere Strecken und/oder höhere Lasten mit einer entsprechend höheren Anzahl an mobilen Einheiten zu verbinden.

Bevorzugt kann vorgesehen sein, dass die mobilen Einheiten jeweils eine Rekuperationseinrichtung, etwa eine Rekuperations- oder Nutzbremse, umfassen.

Dies ermöglicht die (Rück-)Gewinnung elektrischer Energie aus kinetischer Energie, welche elektrische Energie sodann in die Energiespeicher der mobilen Einheiten eingespeist werden kann. Zudem ermöglicht diese bevorzugte Ausführungsform des erfindungsgemäßen Systems aber auch eine gezielte Be- und Entladung der Energiespeicher bestimmter mobiler Einheiten. Beispielsweise kann der Fall eintreten, dass das erste Fahrzeug, während es mehrere mobile Einheiten an einen Zielort transportiert, eine Infrastruktureinrichtung passiert, an der eine mobile Einheit mit leerem Energiespeicher (aufgrund eines temporären Überschusses an Elektrizität) zur Netzstabilisation eingesetzt werden könnte. In diesem Fall ist es möglich, die Rekuperationseinrichtungen anderer mobiler Einheiten bewusst zu aktivieren, was zu einer höheren Belastung des ersten Antriebs des ersten Fahrzeugs und somit zu einer schnelleren Entleerung des Energiespeichers jener mobilen Einheiten führt, deren Rekuperationseinrichtungen nicht aktiviert wurden. Nach Erreichen eines entsprechend niedrigen Füllstands des jeweiligen Energiespeichers kann die mobile Einheit von dem ersten Fahrzeug und/oder von den anderen mobilen Einheiten abgekoppelt und mit der Infrastruktureinrichtung verbunden werden, um die überschüssige elektrische Energie aufzunehmen und das lokale Netz zu stabilisieren. Es ist denkbar, dass diese mobile Einheit, nachdem ihr Energiespeicher vollständig geladen wurde, wieder an ein erstes Fahrzeug bzw. an mit diesem verbundene mobile Einheiten angekoppelt wird, um in der bereits beschriebenen Weise an einen Zielort transportiert zu werden.

Insbesondere kann es vorgesehen sein, dass die mobilen Einheiten mit einem Allradantrieb ausgeführt sind. Dadurch lässt sich die Menge an durch Rekuperation (zurück-) gewonnener elektrischer Energie, die zur Ladung der Energiespeicher verwendet werden kann, maximieren.

Bevorzugt kann vorgesehen sein, dass die mobilen Einheiten jeweils eine Funktionseinheit oder ein Funktionsmittel umfassen, welche Funktionseinheit/Funktionsmittel der Erfüllung einer bestimmten Funktion dient. Beispielsweise können die mobilen Einheiten eine Ladefläche zum Transport von Gütern bzw. Gegenständen, ein Kühlaggregat, um einen temperaturgeführten Transport von Gütern bzw. Gegenständen zu ermöglichen, eine Einrichtung zur vertikalen und horizontalen Verladung oder Bewegung von Lasten (Kran), ein Mähwerk, einen Schneepflug, einen Tank zum Transport von Flüssigkeiten, eine Bergeeinrichtung (umfassend Bergewerkzeuge und/oder hydraulische Rettungsgeräte), eine Drehleiter und/oder zusätzliche Energiespeicher.

Dadurch können die mobilen Einheiten nicht bloß zur Versorgung des ersten Fahrzeugs oder anderer Infrastruktureinrichtungen mit Energie oder zum Transport von Gütern eingesetzt werden; vielmehr ist ein äußerst vielseitiger und flexibler Einsatz der mobilen Einheiten möglich. Da das erfindungsgemäße System typischerweise über eine Vielzahl mobiler Einheiten verfügt, die mittels des ersten Fahrzeugs transportiert werden, kann das System für vielseitige Anwendungsfälle ausgelegt werden. Beispielsweise ist es problemlos möglich, ein erstes Fahrzeug mit einer ersten mobilen Einheit, die mit einer Ladefläche für den Transport von Gütern ausgestattet ist, zu verbinden und an diese erste mobile Einheit eine zweite mobile Einheit mit einem zusätzlichen Energiespeicher, eine dritte mobile Einheit mit einem Kühlaggregat und einem temperaturgeführten Behältnis zum Transport temperatursensibler Güter, eine vierte mobile Einheit mit einem Tank zum Transport von Flüssigkeiten (der etwa mit Treibstoff oder Wasser gefüllt sein kann) und eine fünfte mobile Einheit anzuhängen, die wiederum mit einer Ladefläche zum Transport von Gütern ausgestattet ist. Nach Erreichen des Zielortes können sämtliche mobile Einheiten von dem Fahrzeug gelöst werden und selbstständig oder ferngesteuert zu individuellen Bestimmungsorten bewegt werden, wo beispielsweise die erste und die fünfte mobile Einheit entladen werden, um einen Nahversorger mit Lebensmitteln zu versorgen, die zweite mobile Einheit zur Versorgung eines Haushalts mit elektrischer Energie abgestellt wird, die dritte mobile Einheit eine Apotheke mit Medikamenten versorgt und die vierte mobile Einheit den Trinkwasservorrat eines nicht an die Wasserversorgung angeschlossenen Haushalts wieder auffüllt.

Bevorzugt kann vorgesehen sein, dass die zumindest eine mobile Einheit kräfteübertragend mit dem ersten Fahrzeug verbunden ist. Bevorzugt kann vorgesehen sein, dass mehrere der mobilen Einheiten kräfteübertragend mit dem ersten Fahrzeug und/oder mit der zumindest einen mobilen Einheit verbunden sind. Bevorzugt kann vorgesehen sein, dass sämtliche der mobilen Einheiten kräfteübertragend miteinander verbunden sind. Die Verbindung kann dabei beispielsweise über Deichseln und/oder über Schubstangen hergestellt sein.

Über die kräfteübertragende Verbindung zwischen erstem Fahrzeug und den mobilen Einheiten bzw. zwischen den mobilen Einheiten untereinander ist es beispielsweise möglich, dass die mobilen Einheiten von dem ersten Fahrzeug gezogen werden. Ähnlich einem LKW mit Anhängern oder einem Zug kann das erste Fahrzeug zunächst mit einer ersten mobilen Einheit verbunden sein, die ihrerseits selbst mit einer zweiten mobilen Einheit verbunden ist, an die eine dritte mobile Einheit gekoppelt ist, usw. Mittels des ersten Antriebs können die mobilen Einheiten dann von dem ersten Fahrzeug gezogen und an einen Zielort transportiert werden. Die zweiten elektrischen Antriebe der mobilen Einheiten können selbstverständlich nicht nur dann eingesetzt werden, wenn die mobilen Einheiten von dem ersten Fahrzeug getrennt sind, um die jeweilige mobile Einheit an einen individuellen Bestimmungsort zu bewegen; vielmehr ist es auch denkbar, dass die zweiten Antriebe der mobilen Einheiten bedarfsabhängig zugeschaltet werden können, wenn der erste Antrieb des ersten Fahrzeugs unterstützt werden soll, etwa bei extremen Steigungen oder hohen Lasten. Somit wird ein besonders energieeffizienter Transport der (beladenen) mobilen Einheiten möglich, was insgesamt mit einer beträchtlichen Energieersparnis einhergeht.

Bevorzugt kann vorgesehen sein, dass das erste Fahrzeug durch ein Zugfahrzeug und die mobilen Einheiten durch Anhänger ausgebildet sind oder, anders ausgedrückt, die mobilen Einheiten als Anhänger mit dem Zugfahrzeug verbunden werden können. Das Zugfahrzeug kann dabei mit zusätzlichen funktionellen Einheiten ausgestattet sein, etwa einem Schneepflug, einem Mähwerk, einer Straßenreinigungsvorrichtung etc., welche funktionellen Einheiten ebenfalls durch die Energiespeicher der mobilen Einheiten versorgt werden können.

Dies stellt ein erstes Ausführungsbeispiel des erfindungsgemäßen Systems dar, das weiter unten noch näher beschrieben ist. Dabei können die mobilen Einheiten zunächst als Anhänger des ersten Fahrzeugs transportiert werden, können aber jederzeit von diesem getrennt und individuell als Fahrzeuge genutzt werden. Vorzugsweise sind die mobilen Einheiten dabei selbstfahrend oder ferngesteuert. Durch die Verbindung zwischen mobilen Einheiten und erstem Antrieb des ersten Fahrzeugs kann der erste elektrische Antrieb mit einem effektiven Energiespeicher mit einem beträchtlichen Energieinhalt versorgt werden, ohne dass das erste Fahrzeug eine solche Batterie beherbergen müsste.

Bevorzugt kann vorgesehen sein, dass das erste Fahrzeug durch ein Schienenfahrzeug und die mobilen Einheiten durch Landfahrzeuge ausgebildet sind.

Dies stellt ein zweites Ausführungsbeispiel des erfindungsgemäßen Systems dar, das weiter unten noch näher beschrieben ist. Die mobilen Einheiten können dabei - analog zum oben angeführten ersten Ausführungsbeispiel - durch straßentaugliche, selbstfahrende Landfahrzeuge gebildet sein, die, bei entsprechender Ausbildung des jeweiligen Zugwaggons, selbstständig und ohne Mitwirkung menschlicher Arbeitskräfte auf den Zugwaggon fahren, mittels des Schienenfahrzeugs an einen Zielort verbracht werden und dort wiederum selbstständig von dem jeweiligen Zugwaggon herunterfahren können. Aufgrund des geringen Rollwiderstandes können die mobilen Einheiten dieses Ausführungsbeispiels besonders energieeffizient an den Zielort transportiert werden.

Bevorzugt kann vorgesehen sein, dass das erste Fahrzeug durch ein Schiff und die mobilen Einheiten durch Landfahrzeuge ausgebildet sind.

Dies stellt ein drittes Ausführungsbeispiel des erfindungsgemäßen Systems dar, das weiter unten noch näher beschrieben ist. Gerade im Zusammenhang mit der Versorgung von Infrastruktur auf Inseln hat dieses Ausführungsbeispiel immense Vorteile - einerseits ist es bereits mit derzeit genutzten (Auto-)Fähren möglich, eine sehr große Anzahl an Landfahrzeugen - und somit an mobilen Einheiten - zu transportieren; andererseits wären gerade die für den Betrieb eines Schiffantriebs notwendigen Batterien extrem teuer, platzraubend und schwer, sodass die Versorgung des Schiffantriebs über die Energiespeicher der mobilen Einheiten große Vorteile mit sich bringt. Darüber hinaus können die - in diesem Fall primär, aber nicht ausschließlich als mobile Energiespeicher dienenden - mobilen Einheiten in jedem Hafen, in dem ein Ent- und Beladen von Fahrzeugen möglich ist, auf besonders einfache Weise ausgetauscht werden und vor Ort - meist aus Photovoltaikanlagen - wieder aufgeladen werden, um auf einer der nächsten Fähren wieder eingesetzt zu werden. Schließlich können die mobilen Einheiten gerade auf Inseln aufgrund ihrer geringen Größe zur kleinstrukturierten Versorgung von Infrastruktur (Geschäften, Haushalten, usw.) eingesetzt werden.

Bevorzugt kann vorgesehen sein, dass das erste Fahrzeug keinen Energiespeicher zur Versorgung des ersten elektrischen Antriebs aufweist.

Das erste Fahrzeug selbst benötigt, wie oben beschrieben, grundsätzlich keinen eigenen Energiespeicher; ein solcher kann aber selbstverständlich dennoch vorhanden sein, insbesondere zur Versorgung kritischer Komponenten oder zur Zurücklegung sehr kurzer Wegstrecken. Da das erste Fahrzeug selbst über keinen Energiespeicher verfügen muss, kann es deutlich günstiger, platzsparender und leichter konstruiert werden als herkömmliche Fahrzeuge mit elektrischem Antrieb.

Grundsätzlich ist es auch möglich, dass das erste Fahrzeug ebenfalls durch eine mobile Einheit ausgebildet ist. Im Allgemeinen sind die zweiten elektrischen Antriebe aber leistungsschwächer als der erste elektrische Antrieb des ersten Fahrzeugs ausgebildet, sodass in der Regel ein leistungsstärkeres Fahrzeug als erstes Fahrzeug eingesetzt wird. Im Falle, dass auch das erste Fahrzeug durch eine mobile Einheit mit einem zweiten elektrischen Antrieb (und einem Energiespeicher) ausgebildet ist, ist es vorteilhaft, wenn im Betriebszustand des ersten Fahrzeugs - also wenn dieses zum Transport weiterer mobiler Einheiten eingesetzt wird - nicht nur der (erste) elektrische Antrieb des ersten Fahrzeugs, sondern auch einige oder sämtliche der (zweiten) elektrischen Antriebe der mobilen Einheiten bestimmungsgemäß betrieben werden, um die erforderliche Leistung aufzubringen.

Eine Aufgabe der Erfindung wird gelöst durch ein System umfassend zumindest ein erstes Gebäude mit zumindest einer Kommunikationseinrichtung sowie mehrere mobile Einheiten, welche mobilen Einheiten dazu eingerichtet sind, über die Kommunikationseinrichtung gesteuert zu werden, wobei die mobilen Einheiten jeweils einen zweiten elektrischen Antrieb sowie einen Energiespeicher zur Versorgung des zweiten elektrischen Antriebs mit Energie umfassen, und wobei die mobilen Einheiten unabhängig voneinander bewegt oder zu bedarfsabhängigen Einheiten aus mehreren mobilen Einheiten zusammengeschlossen und als Einheit bewegt werden können.

Analog zu den vorstehend beschriebenen Ausführungsformen weist dieses System anstelle des ersten Fahrzeugs ein erstes Gebäude auf, welches Gebäude über eine Kommunikationseinrichtung verfügt, die zur Steuerung der mobilen Einheiten dient. Die mobilen Einheiten können wiederum miteinander verbunden werden, um eine oder mehrere bedarfsabhängige Einheiten zu bilden. Eine erste bedarfsabhängige Gruppe kann beispielsweise durch eine Gruppe von 10 mobilen Einheiten gebildet sein, die jeweils über eine Ladefläche zum Transport von Gütern verfügen. Nach der Beladung der mobilen Einheiten mit Gütern kann über die Kommunikationseinrichtung des Gebäudes, in welchem Gebäude sich beispielsweise eine mit erfahrenem Personal besetzte Leitstelle befinden kann, ein Zielort an die erste bedarfsabhängige Gruppe übermittelt werden, an welchen Zielort sich die erste bedarfsanhängige Gruppe eigenständig bzw. selbstfahrend begeben kann. Auf dem Weg an den Zielort können die zweiten elektrischen Antriebe aller mobiler Einheiten wahlweise ein- oder ausgeschaltet werden, um die zurückzulegende Strecke möglichst energieeffizient zurücklegen zu können. Am Zielort angekommen können sich die (noch immer miteinander verbundenen) mobilen Einheiten der ersten Gruppe voneinander lösen, um 10 individuelle Bestimmungsorte anzusteuern, an welchen Bestimmungsorten es 10 Infrastruktureinrichtungen mit den transportierten Gütern zu versorgen gilt. Nach erfolgter Zustellung der Güter können sich die mobilen Einheiten (einige oder sämtliche der ursprünglichen 10 mobilen Einheiten) beispielsweise wieder am ursprünglichen Zielort oder an einem anderen, beispielsweise von der Kommunikationseinrichtung übermittelten neuen Zielort zu einer oder mehreren bedarfsabhängigen Gruppe(n) zusammenschließen und sich zu neuen Zielorten begeben. Das System gemäß dieser Ausführungsform kann vorzugsweise im Nah- oder Regionalverkehr und besonders bevorzugt zum Transport vergleichsweise geringer Lasten eingesetzt werden. Denkbar ist beispielsweise der Einsatz auf einem Flughafen, wo das erste Gebäude durch den Flughafentower ausgebildet sein kann und die mobilen Einheiten vorrangig zum Transport von Gepäckstücken eingesetzt werden können.

Eine Aufgabe der Erfindung wird gelöst durch ein Verfahren zur Versorgung einer Infrastruktur unter Verwendung des oben beschriebenen Systems, wobei das Verfahren zumindest die folgenden Verfahrensschritte umfasst:
Beladen des ersten Fahrzeugs und/oder einer, mehrerer oder sämtlicher der mobilen Einheiten mit Gütern und/oder Energie; vorzugsweise werden nur die mobilen Einheiten mit Gütern beladen und die Energiespeicher der mobilen Einheiten zumindest teilweise geladen.
Herstellen einer lösbaren Verbindung zwischen der zumindest einen mobilen Einheit und dem ersten Fahrzeug und/oder zwischen den mobilen Einheiten; vorzugsweise ist die zumindest eine mobile Einheit kräfteübertragend und elektrisch leitend mit dem ersten Fahrzeug verbunden, sind die weiteren mobilen Einheiten miteinander ebenfalls kräfteübertragend und elektrisch leitend verbunden und ist zumindest eine der weiteren mobilen Einheiten kräfteübertragend und elektrisch leitend mit der zumindest einen mobilen Einheit verbunden.
Bewegen des ersten Fahrzeugs und/oder der (miteinander verbundenen) mobilen Einheiten zu einem ersten Zielort, welcher erste Zielort vorzugsweise in einem Eintrittsbereich der zu versorgenden Infrastruktur; vorzugsweise wird das erste Fahrzeug dabei durch den ersten Antrieb angetrieben, wodurch auch die mit dem ersten Fahrzeug (mittelbar oder unmittelbar) verbundenen mobilen Einheiten bewegt werden.
Lösen der Verbindung zwischen der zumindest einen mobilen Einheit und dem ersten Fahrzeug und/oder zwischen den mobilen Einheiten; vorzugsweise werden am Zielort des ersten Fahrzeugs, welcher Zielort im Eintrittsbereich liegen kann, sämtliche Verbindungen gelöst.
Selbstständiges Bewegen des ersten Fahrzeugs und/oder der mobilen Einheiten von dem ersten Zielort zu (voneinander und von dem ersten Zielort) entfernt gelegenen individuellen Zielorten, welche individuellen Zielorte vorzugsweise in Versorgungsbereichen der Infrastruktur bzw. an den zu versorgenden Infrastruktureinrichtungen liegen; vorzugsweise kann das erste Fahrzeug am Zielort im Eintrittsbereich verbleiben, während sich die mobilen Einheiten selbstständig und insbesondere zeitlich parallel an die individuelle Ziel- oder Bestimmungsorte in den Versorgungsbereichen bewegen können. Hierdurch ist eine Parallelisierung des Zustell- bzw. Versorgungsvorgangs sowie eine Automatisierung dieses Vorgangs ermöglicht.
Entladen und/oder Beladen des ersten Fahrzeugs und/oder der mobilen Einheiten am jeweiligen individuellen Zielort, insbesondere im jeweiligen Versorgungsbereich; alternativ oder zusätzlich können die mobilen Einheiten im jeweiligen Versorgungsbereich auch andere Funktionen erfüllen, etwa eine Stabilisierung eines Stromnetzes durch Aufnahme überschüssiger elektrischer Energie.
Gegebenenfalls selbstständiges Bewegen des ersten Fahrzeugs und/oder der mobilen Einheiten von den jeweiligen individuellen Zielorten, insbesondere den Versorgungsbereichen, zu dem ersten Zielort oder einem neuen Zielort, an welchen neuen Zielort sich das erste Fahrzeug zwischenzeitlich bewegt hat oder an welchem neuen Zielort sich ein anderes erstes Fahrzeug befindet; um die mobilen Einheiten für andere Aufgaben verwenden zu können, wird es in der Regel notwendig sein, diese an andere Orte zu verbringen.
Gegebenenfalls Herstellen einer lösbaren Verbindung zwischen der zumindest einen mobilen Einheit und dem ersten Fahrzeug und/oder zwischen den mobilen Einheiten; analog zu dem oben beschriebenen Trennen der Verbindungen können nun sämtliche Verbindungen zwischen den mobilen Einheiten und dem ersten Fahrzeug, sowie zwischen der zumindest einen mobilen Einheit und dem ersten Fahrzeug wieder hergestellt werden.
Gegebenenfalls Bewegen des ersten Fahrzeugs und/oder der miteinander verbundenen mobilen Einheiten aus dem Eintrittsbereich der versorgten Infrastruktur, um an anderen Zielorten wieder eingesetzt zu werden.

Aufgrund des erfindungsgemäßen Zusammenschlusses aus mehreren mobilen Einheiten und ggf. einem ersten Fahrzeug ist eine besonders energieeffiziente und zugleich multifunktionelle Versorgung von Infrastruktureinrichtungen möglich. Durch den Einsatz der mobilen Einheiten, die erfindungsgemäß über einen eigenen (elektrischen) Antrieb und einen entsprechenden Energiespeicher zur Versorgung dieses Antriebs verfügen, wird es möglich, die Bestimmungsorte der einzelnen mobilen Einheiten - bzw. der auf den mobilen Einheiten gelagerten Güter - parallel bzw. zeitgleich anzufahren, wodurch gegenüber einem herkömmlichen sequentiellen Abladen der auf einem oder mehreren Anhängern gelagerten Güter, die für mehrere Empfänger bestimmt sind, eine erhebliche Zeitersparnis erzielt werden kann. Zudem müssen bei herkömmlichen, sequenziellen Lieferwegen stets das hohe Leergewicht des elektrischen Zugfahrzeugs und auch all jene Güter, die für andere Empfänger bestimmt sind, zu jedem einzelnen der angefahrenen Empfänger mittransportiert werden, was mit einem erheblich höheren Energieverbrauch als im Falle des erfindungsgemäßen Verfahrens verbunden ist.

Eine Aufgabe der Erfindung wird gelöst durch ein Verfahren zur Regelung eines Speicherstandes der mobilen Einheiten des oben beschriebenen Systems, wobei das Verfahren zumindest die folgenden Verfahrensschritte umfasst:
Antreiben des Systems mittels des ersten Antriebs des ersten Fahrzeugs und/oder mittels eines oder mehrerer der zweiten Antriebe einer ersten Gruppe der mobilen Einheiten;
gleichzeitiges Rekuperieren mittels einer oder mehrerer der mobilen Einheiten einer zweiten Gruppe der mobilen Einheiten.

Dieses Verfahren ermöglicht eine gezielte Be- und Entladung der Energiespeicher einzelner mobiler Einheiten des erfindungsgemäßen Systems. Beispielsweise kann der Fall eintreten, dass die Energiespeicher einer ersten Gruppe mobiler Einheiten des Systems bewusst entladen werden sollen, beispielsweise um die an einem Ziel- oder Bestimmungsort aufnehmbare elektrische Energiemenge zu maximieren, und/oder die Energiespeicher einer zweiten Gruppe mobiler Einheiten des Systems bewusst geladen werden sollen, beispielsweise um die an einem Ziel- oder Bestimmungsort abgebbare elektrische Energiemenge zu maximieren. Hierzu können die Antriebe der ersten Gruppe mobiler Einheiten bewusst zugeschaltet werden, während die Rekuperationseinrichtungen der zweiten Gruppe mobiler Einheiten bewusst aktiviert werden. Dies kann insbesondere dann erfolgen, wenn zur Bewältigung der bis zum Zielort verbleibenden Strecke (in einer angestrebten Zeitspanne) keine weiteren (zweiten) elektrischen Antriebe betrieben werden müssten, und/oder wenn nicht gebremst werden soll. Die Rekuperationseinrichtungen der zweiten Gruppe führen demnach zu einer höheren Belastung des ersten Antriebs des ersten Fahrzeugs und/oder der zweiten Antriebe der ersten Gruppe mobiler Einheiten. Somit kommt es zu einer schnelleren Entleerung der Energiespeicher der mobilen Einheiten der ersten Gruppe. Nach Erreichen eines entsprechend niedrigen Füllstands der Energiespeicher der ersten Gruppe und/oder eines entsprechend hohen Füllstands der Energiespeicher der zweiten Gruppe, können die zur Abgabe oder Aufnahme von elektrischer Energie bestimmten mobilen Einheiten von dem ersten Fahrzeug und/oder von den anderen mobilen Einheiten abgekoppelt und mit der jeweiligen Infrastruktureinrichtung verbunden werden. Vorzugsweise wird dieses Verfahren zeitlich so auf den voraussichtlichen Ankunftszeitpunkt am jeweiligen Ziel- oder Bestimmungsort abgestimmt, dass der gewünschte Ladezustand der jeweiligen mobilen Einheiten im Wesentlichen zeitgleich mit Erreichen des Ziel- oder Bestimmungsortes erreicht ist.

### Wege zur Ausführung der Erfindung

Im Folgenden wird die Erfindung anhand von Ausführungsbeispielen näher beschrieben. Die folgenden Ausführungen sollen den Erfindungsgedanken zwar noch deutlicher illustrieren, sie sollen diesen aber weder abschließend wiedergeben noch einengen.

In einem ersten Ausführungsbeispiel umfasst das erfindungsgemäße System ein durch ein straßentaugliches und geländegängiges Zugfahrzeug ausgebildetes erstes Landfahrzeug und zwischen einer und 20 mobilen Einheiten, die ebenfalls durch straßentaugliche und geländegängige, aber führerlose bzw. selbstfahrende Fahrzeuge ausgebildet sind. Das erste Fahrzeug umfasst einen ersten elektrischen Antrieb und auch die mobilen Einheiten umfassen jeweils einen eigenen elektrischen Antrieb, der zweiter elektrischer Antrieb genannt wird und jeweils durch einen Energiespeicher der jeweiligen mobilen Einheit mit elektrischer Energie versorgt wird. Dabei weist der erste elektrische Antrieb eine höhere Leistung auf als die zweiten Antriebe; es ist aber auch denkbar, dass der erste elektrische Antrieb und die zweiten elektrischen Antriebe im Wesentlichen die selbe Leistung aufweisen. Sämtliche mobile Einheiten sind - der Einfachheit halber lediglich - mit einer Ladefläche zum Transport von Gütern ausgestattet. Das Zugfahrzeug selbst weist vorzugsweise keinen eigenen Energiespeicher zur Versorgung des ersten elektrischen Antriebs auf.

Das erfindungsgemäße System soll nun dazu verwendet werden, 10 Haushalte in einem etwa 200 km von einem Umschlagslager entfernt gelegenen Bergdorf mit Brennholz zu versorgen; dazu werden die Koordinaten des Bergdorfs bzw. der 10 Haushalte sowie Informationen über den jeweiligen Brennholzbedarf über die Kommunikationseinrichtung an das erste Fahrzeug des erfindungsgemäßen Systems übermittelt. Dementsprechend werden zunächst im Umschlagslager die Brennholzvorräte für jeden zu beliefernden Haushalt auf die Ladefläche jeweils einer mobilen Einheit geladen. Weiters werden die Energiespeicher der mobilen Einheiten vollständig aufgeladen. In weiterer Folge verbinden sich die beladenen mobilen Einheiten eigenständig mit dem ebenfalls auf dem Gelände des Umschlagslagers befindlichen ersten Fahrzeug. Hierfür nähert sich zunächst eine erste mobile Einheit dem ersten Fahrzeug an und koppelt sich über eine Deichsel an eine Kupplung des ersten Fahrzeugs an. Anschließend koppeln sich nach und nach weitere mobile Einheiten an die jeweils zuletzt verbundene mobile Einheit, bis alle 10 mit Brennholz beladenen mobilen Einheiten verbunden sind. Da für den zurückzulegenden Weg unter Berücksichtigung der zu transportierenden Last und in Anbetracht der in das Bergdorf zurückzulegenden Höhenmeter noch zusätzlicher Energiebedarf besteht, der durch die 10 bereits verbundenen mobilen Einheiten nicht zur Gänze gedeckt werden kann, ohne die Energiespeicher auf dem Weg laden zu müssen, werden noch zwei zusätzliche mobile Einheiten angekoppelt, die zwar keine Güter geladen haben, aber jeweils mit einem vollständig geladenen Energiespeicher ausgestattet sind.

Das (fahrergelenkte) erste Fahrzeug setzt sich nun in Richtung des ersten Bergdorfes in Bewegung, wobei der erste elektrische Antrieb des ersten Fahrzeugs durch die Energiespeicher der mobilen Einheiten mit Energie versorgt wird. Zielort des ersten Fahrzeugs ist ein Parkplatz in der Nähe der zum besagten Bergdorf nächstgelegenen Autobahnabfahrt, wobei die Koordinaten dieses Parkplatzes wiederum über die Kommunikationseinrichtung empfangen und deren Auswahl auf zeitlich zurückliegenden, bereits erfolgreich abgeschlossenen Versorgungsfahrten (desselben und/oder anderer erfindungsgemäßer Systeme) basieren kann. Bis zu diesem Zielort werden die mobilen Einheiten durch das erste Fahrzeug gezogen, wobei lediglich der erste Antrieb betrieben wird, die zweiten Antriebe aber abgeschaltet bleiben können.

Das erste Fahrzeug (und vorzugsweise auch die mobilen Einheiten) umfasst Messsysteme, die zumindest Informationen über den bereits zurückgelegten Weg, den bis zum Zielort noch zurückzulegenden Weg, den aktuellen und den prognostizierten Ladezustand der Energiespeicher der mobilen Einheiten sowie über in und außer Reichweite befindliche Infrastruktureinrichtungen, wie Ladestationen, zu beliefernde Bestimmungsorte, usw., erfassen und laufend verarbeiten können. Etwa 15 Minuten vor Erreichen des Zielortes zeigen die Messsysteme des ersten Fahrzeugs, dass das erste Fahrzeug den Zielort zwar noch problemlos erreichen wird, aber der Ladezustand der Energiespeicher der mit Gütern beladenen mobilen Einheiten nicht mehr ausreichend sein wird, damit die mobilen Einheiten ihre Bestimmungsorte bzw. individuellen Zielorte (also die zu beliefernden Haushalte) eigenständig erreichen können. Daraufhin werden die 10 beladenen mobilen Einheiten in den Rekuperationsmodus versetzt, die Verbindungen zwischen deren Energiespeicher und dem ersten Antrieb des ersten Fahrzeugs getrennt und wird der erste Antrieb fortan nur noch durch die Energiespeicher der beiden zusätzlichen (unbeladenen) mobilen Einheiten mit Energie versorgt. Diese geringfügige und kurzzeitige Rekuperation genügt, damit sämtliche beladene mobile Einheiten bei Erreichen des Zielortes (also des Parkplatzes) noch über einen ausreichend hohen Energiespeicherstand verfügen.

Nach Erreichen des Zielortes lösen die mobilen Einheiten eigenständig die Verbindung untereinander und zum ersten Fahrzeug und aktivieren ihren jeweiligen zweiten Antrieb, um sich in Richtung der zu versorgenden Infrastruktur (also in Richtung des Bergdorfes) auf den Weg zu machen. Die individuellen Bestimmungsorte (also die Adressen der jeweiligen Haushalte) wurden den mobilen Einheiten in Form von GPS-Daten von dem ersten Fahrzeug übermittelt. Das erste Fahrzeug verbleibt mit den beiden zusätzlichen (unbeladenen) mobilen Einheiten auf dem Parkplatz zurück; die beiden mobilen Einheiten werden mit der dort verfügbaren Ladestation verbunden, um deren Energiespeicher wieder aufzuladen.

Die - verglichen mit der Autobahn - engen, steilen und unwegsamen Bergstraßen und Schotterwege, die bis zu den zu versorgenden Haushalten zurückgelegt werden müssen, stellen für die mobilen Einheiten, die in diesem Ausführungsbeispiel deutlich wendiger ausgebildet sind als das erste Fahrzeug, und deren zweite Antriebe kein Problem dar. Die beladenen mobilen Einheiten erreichen ihre Ziele mit (gerade noch) ausreichenden Energiereserven, parken in designierten Entladebereichen auf den Grundstücken der zu versorgenden Haushalte und deaktivieren ihre zweiten Antriebe nach Erreichen dieser endgültigen Bestimmungsorte. Etwaige in den Energiespeichern der mobilen Einheiten vorhandene Energiereserven können die mobilen Einheiten an die zu versorgenden Haushalte abgeben, beispielsweise um Haushaltsgeräte mit Strom zu versorgen.

Da die jeweiligen Haushalte regelmäßig mit Gütern beliefert werden und zudem über eigene Photovoltaik-Vorrichtungen verfügen, über die die Energiespeicher der mobilen Einheiten wieder aufgeladen werden können, standen bei den 10 belieferten Grundstücken bereits 10 mobile Einheiten von früheren Lieferungen bereit, die keine Güter (mehr) transportieren - also deren Ladeflächen leer sind - aber deren Energiespeicher vollständig geladen sind. Diese 10 leeren mobilen Einheiten haben sich in Richtung des ersten Fahrzeugs auf den Weg gemacht, als das erste Fahrzeug auf dem Parkplatz angekommen ist und entsprechende Steuersignale und GPS-Daten an diese 10 leeren mobilen Einheiten übermittelt hat. Folglich treffend die 10 leeren mobilen Einheiten kurz nach Abfahrt der mit Brennholz beladenen mobilen Einheiten auf dem Parkplatz ein, wo sie sich mit dem ersten Fahrzeug verbinden. Durch die während des Bergabfahrens aktivierten Rekuperationseinrichtungen sind die Energiespeicher der 10 leeren mobilen Einheiten bei deren Eintreffen auf dem Parkplatz fast vollständig geladen. Nach abgeschlossener Ladung der beiden zusätzlichen mobilen Einheiten über die Ladestationen des Parkplatzes koppeln sich auch diese beiden mobilen Einheiten wieder an das erste Fahrzeug bzw. an die zuletzt verbundene mobile Einheit an.

Anschließend macht sich das erste Fahrzeug - basierend auf Informationen, die es über seine Kommunikationseinrichtung von anderen erfindungsgemäßen Systemen, ersten Fahrzeugen und/oder anderen mobilen Einheiten anderer erfindungsgemäßer Systeme und/oder externen Einrichtungen erhält - auf den Weg zu einem neuen Zielort, der im wenige Kilometer entfernt gelegenen Industriegebiet einer kleinen Stadt liegt. Dort stehen 15 mit Gütern beladene mobile Einheiten bereit, die abgeholt und zu dem eingangs genannten Umschlagslager gebracht werden sollen.

Da für die bis zum neuen Zielort zurückzulegende Strecke kein hoher Energiebedarf besteht, werden 11 der 12 derzeit mit dem ersten Fahrzeug verbundenen mobilen Einheiten auf dem Weg dorthin auf dem Betriebsgelände eines Fahrzeugherstellers abgestellt, wo die in den mobilen Einheiten gespeicherte Energie in das betriebseigene Energienetz eingespeist wird; die mobilen Einheiten selbst können durch die betriebseigenen PV-Anlagen wieder aufgeladen und anschließend von einem anderen Zugfahrzeug abgeholt werden. Dabei meldet eine Kommunikationseinrichtung des Fahrzeugherstellers den aktuellen Energiebedarf, diese Meldung wird von der Kommunikationseinrichtung des ersten Fahrzeugs empfangen oder an diese weitergeleitet und in weiterer Folge dazu verwendet, die Route des Systems zu planen. Das erste Fahrzeug setzt eine entsprechende Annahmebestätigung oder eine Versorgungsmeldung über das Kommunikationsnetz ab, wodurch andere Systeme oder externe Einrichtungen, die mit dem Kommunikationsnetz verbunden sind, darüber informiert werden, dass der Versorgungsbedarf des Fahrzeugherstellers gedeckt ist.

Dieses erste Ausführungsbeispiel zeigt, dass das erfindungsgemäße System überaus flexibel ist, einen bedarfsoptimierten Energieverbrauch ermöglicht, Leerfahrten vermeidet und Synergien mit bestehenden Infrastruktureinrichtungen nutzt. Selbstverständlich könnte das erfindungsgemäße System dieses Ausführungsbeispiels auch zur Versorgung anderer Infrastrukturen verwendet werden, beispielsweise zur Versorgung eines städtischen Bezirkes, einer Stadt oder eines Betriebes.

Ein zweites Ausführungsbeispiel unterscheidet sich von dem ersten Ausführungsbeispiel lediglich dadurch, dass das erste Fahrzeug nicht durch ein straßentaugliches Zugfahrzeug, sondern durch ein Schienenfahrzeug ausgebildet ist, wobei das Schienenfahrzeug eine Lokomotive und mehrere Waggons umfasst, welche Waggons zum Transport von Landfahrzeugen (etwa von PKW oder LKW) eingerichtet ist.

In diesem Ausführungsbeispiel kann naturgemäß eine deutlich höhere Anzahl mobiler Einheiten mittels des ersten Fahrzeugs transportiert werden, wobei die mobilen Einheiten das erste Fahrzeug selbstständig befahren und sich dabei selbstständig mit einem der jeweiligen Parkposition zugeordneten Anschluss des Schienenfahrzeugs verbinden können. Hierdurch werden die Energiespeicher der mobilen Einheiten mit dem Bordnetz des Schienenfahrzeugs verbunden, um den ersten elektrischen Antrieb des Schienenfahrzeugs bzw. der Lokomotive mit elektrischer Energie zu versorgen. Wiederum weist das Schienenfahrzeug selbst vorzugsweise keinen eigenen Energiespeicher auf.

Es kann aber auch vorgesehen sein, dass das erste Fahrzeug (hier das Schienenfahrzeug) selbst über einen Energiespeicher verfügt und/oder an eine externe Energieversorgung - etwa eine Oberleitung oder eine Stromschiene - angeschlossen ist. In diesem Fall ist es auch denkbar, dass der erste Antrieb und/oder die zweiten Antriebe, also die elektrischen Antriebe der mobilen Einheiten, und/oder die Energiespeicher der mobilen Einheiten durch das erste Fahrzeug bzw. dessen Energiespeicher und/oder dessen Energieversorgung versorgt werden.

Im Falle des zweiten Ausführungsbeispiels sind die Zielorte, an die das Schienenfahrzeug die mobilen Einheiten transportieren soll, in der Regel durch Bahnhöfe (Güter-, Umschlag- oder Rangierbahnhöfe) ausgebildet. Ansonsten treffen alle Ausführungen zum ersten Ausführungsbeispiel auf das zweite Ausführungsbeispiel zu.

In einem dritten Ausführungsbeispiel ist das erste Fahrzeug durch ein Schiff ausgebildet, nämlich konkret durch eine Fähre, die Personen und Fahrzeuge zwischen Inseln und dem Festland hin und her transportiert. Anders als herkömmliche Fähren weist die hier eingesetzte Fähre jedoch keinen konventionellen Antrieb, sondern einen ersten elektrischen Antrieb auf. Vorzugsweise weist die Fähre jedoch selbst keinen eigenen Energiespeicher zur Versorgung dieses elektrischen Antriebs auf.

Die mobilen Einheiten sind bei diesem Ausführungsbeispiel durch eine Vielzahl straßentauglicher Landfahrzeuge, wie sie bereits in den beiden früheren Ausführungsbeispielen verwendet wurden, sowie durch mehrere flugfähige (Fracht-) Drohnen ausgebildet. Sowohl die als Landfahrzeuge als auch die als Drohnen ausgebildeten mobilen Einheiten verfügen über zweite elektrische Antriebe für den Eigenantrieb; allerdings sind hier nur die als Landfahrzeuge ausgebildeten mobilen Einheiten, wenn sie ihre Parkposition auf einem Deck oder in einem Frachtraum der Fähre erreicht haben, elektrisch leitend mit einem Bordnetz der Fähre verbunden, um den ersten elektrischen Antrieb mit elektrischer Energie zu versorgen.

Im Falle des dritten Ausführungsbeispiels sind die Zielorte, an die die Fähre die mobilen Einheiten transportieren soll, in der Regel durch Häfen, oder auch durch zwischen mehreren Inseln gelegene Ankerpunkte ausgebildet. Ansonsten treffen aber sämtliche Ausführungen zum ersten und zweiten Ausführungsbeispiel auch auf das dritte Ausführungsbeispiel zu.

In sämtlichen der oben beschriebenen Ausführungsbeispiele kann es vorgesehen sein, dass die mobilen Einheiten durch straßen- und geländegängige Landfahrzeuge ausgebildet sind, die mit einer oder mehreren flugfähigen (Fracht-) Drohnen zusammenwirken. Insbesondere kann es vorgesehen sein, dass eine mobile Einheit jeweils ein Landfahrzeug und eine diesem Landfahrzeug zugeordnete Drohne der vorgenannten Art umfasst. Dabei kann die Drohne als Späher für das Landfahrzeug fungieren, indem die Drohne - etwa mittels computer- und/oder KI-gestützter Bilderkennung - die Umgebung des Landfahrzeugs erfasst, analysiert und Ergebnisse dieser Analyse und/oder Steuerungsbefehle, im Allgemeinen also "Wissen" im weitesten Sinn, an das Landfahrzeug übermittelt. So können beispielsweise Routen der mobilen Einheit zu den zu versorgenden Infrastruktureinrichtungen optimiert werden. Die Drohnen können dabei mit einem kleinen - und damit leichten - Energiespeicher ausgestattet sein, welcher Energiespeicher regelmäßig durch Verbinden der Drohne mit dem Energiespeicher des jeweiligen Landfahrzeugs geladen werden kann; das Landfahrzeug fungiert somit als Homebase oder Energie-Hub für die Drohne. Zudem kann die Drohne dazu genutzt werden, Güter, die mittels des Landfahrzeugs transportiert werden, von dem Landfahrzeug zu einem innerhalb einer Flugreichweite der Drohne gelegenen Zielort zu transportieren. Somit wird es möglich, Infrastruktureinrichtungen durch die mobile Einheit (beispielsweise mit Gütern) zu versorgen, ohne dass das Landfahrzeug in die unmittelbare Nähe dieser Infrastruktureinrichtungen navigieren muss.

## Patentansprüche

1. System umfassend zumindest
- ein erstes Fahrzeug, insbesondere ein Land-, Wasser- oder Luftfahrzeug, welches erste Fahrzeug zumindest einen ersten elektrischen Antrieb und eine Kommunikationseinrichtung umfasst, sowie
- mehrere mobile Einheiten, wobei die mobilen Einheiten jeweils einen zweiten elektrischen Antrieb sowie einen Energiespeicher zur Versorgung des zweiten elektrischen Antriebs mit Energie umfassen, und
wobei die Kommunikationseinrichtung dazu ausgebildet ist, Informationen betreffend einen individuellen Zielort an die mobilen Einheiten zu übertragen, und wobei die mobilen Einheiten dazu eingerichtet sind, den individuellen Zielort selbstständig zu erreichen.

2. System nach Anspruch 1, wobei das erste Fahrzeug für den Transport von mobilen Einheiten ausgebildet ist, und wobei die mobilen Einheiten dazu ausgebildet sind, mittels des ersten Fahrzeugs transportiert zu werden, und
wobei zumindest eine der mobilen Einheiten derart mit dem ersten Fahrzeug verbunden ist, dass eine Versorgung des ersten elektrischen Antriebs mit Energie durch den Energiespeicher der zumindest einen mobilen Einheit ermöglicht ist.

3. System nach Anspruch 1 oder 2, **dadurch gekennzeichnet, dass** mehrere der mobilen Einheiten derart mit dem ersten Fahrzeug und/oder mit der zumindest einen mobilen Einheit verbunden sind, dass eine Versorgung des ersten elektrischen Antriebs mit Energie durch die Energiespeicher der mehreren mobilen Einheiten ermöglicht ist.

4. System nach einem der Ansprüche 1 bis 3, **dadurch gekennzeichnet, dass** sämtliche der mobilen Einheiten derart mit dem ersten Fahrzeug verbunden sind, dass eine Versorgung des ersten elektrischen Antriebs mit Energie durch die Energiespeicher sämtlicher mobiler Einheiten ermöglicht ist.

5. System nach einem der Ansprüche 1 bis 4, **dadurch gekennzeichnet, dass** die mobilen Einheiten selbst durch zweite Fahrzeuge, insbesondere durch Land-, Wasser- oder Luftfahrzeuge, ausgebildet sind.

6. System nach einem der Ansprüche 1 bis 5, **dadurch gekennzeichnet, dass** die mobilen Einheiten unabhängig vom ersten Fahrzeug oder durch das erste Fahrzeug steuerbar, insbesondere fernsteuerbar, sind, oder dass die mobilen Einheiten durch selbstfahrende Fahrzeuge ausgebildet sind.

7. System nach einem der Ansprüche 1 bis 6, **dadurch gekennzeichnet, dass** die mobilen Einheiten jeweils eine Funktionseinheit umfassen, beispielsweise eine Ladefläche zum Transport von Gegenständen, ein Kühlaggregat, um einen temperaturgeführten Transport von Gegenständen zu ermöglichen, und/oder weitere Energiespeicher.

8. System nach einem der Ansprüche 1 bis 7, **dadurch gekennzeichnet, dass** die zumindest eine mobile Einheit kräfteübertragend mit dem ersten Fahrzeug verbunden ist, und/oder dass mehrere der mobilen Einheiten kräfteübertragend mit dem ersten Fahrzeug und/oder mit der zumindest einen mobilen Einheit verbunden sind, und/oder dass sämtliche der mobilen Einheiten kräfteübertragend miteinander verbunden sind.

9. System nach einem der Ansprüche 1 bis 8, **dadurch gekennzeichnet, dass** das erste Fahrzeug durch ein Zugfahrzeug und die mobilen Einheiten durch Anhänger ausgebildet sind.

10. System nach einem der Ansprüche 1 bis 8, **dadurch gekennzeichnet, dass** das erste Fahrzeug durch ein Schienenfahrzeug und die mobilen Einheiten durch Landfahrzeuge ausgebildet sind.

11. System nach einem der Ansprüche 1 bis 8, **dadurch gekennzeichnet, dass** das erste Fahrzeug durch ein Schiff und die mobilen Einheiten durch Landfahrzeuge ausgebildet sind.

12. System nach einem der Ansprüche 1 bis 11, **dadurch gekennzeichnet, dass** das erste Fahrzeug keinen Energiespeicher zur Versorgung des ersten elektrischen Antriebs aufweist.

13. System umfassend zumindest ein erstes Gebäude mit zumindest einer Kommunikationseinrichtung sowie mehrere mobile Einheiten, welche mobilen Einheiten dazu eingerichtet sind, über die Kommunikationseinrichtung gesteuert zu werden, wobei die mobilen Einheiten jeweils einen zweiten elektrischen Antrieb sowie einen Energiespeicher zur Versorgung des zweiten elektrischen Antriebs mit Energie umfassen, und wobei die mobilen Einheiten unabhängig voneinander bewegt oder zu bedarfsabhängigen Einheiten aus mehreren mobilen Einheiten zusammengeschlossen und als Einheit bewegt werden können.

14. Verfahren zur Versorgung einer Infrastruktur unter Verwendung des Systems nach einem der Ansprüche 1 bis 13, umfassend zumindest die folgenden Verfahrensschritte:
a. Beladen des ersten Fahrzeugs und/oder einer, mehrerer oder sämtlicher der mobilen Einheiten mit Gütern und/oder Energie;
b. Herstellen einer lösbaren Verbindung zwischen der zumindest einen mobilen Einheit und dem ersten Fahrzeug und/oder zwischen den mobilen Einheiten;
c. Bewegen des ersten Fahrzeugs und/oder der mobilen Einheiten zu einem ersten Zielort, welcher erste Zielort vorzugsweise in einem Eintrittsbereich der zu versorgenden Infrastruktur liegt;
d. Lösen der Verbindung zwischen der zumindest einen mobilen Einheit und dem ersten Fahrzeug und/oder zwischen den mobilen Einheiten;
e. Selbstständiges Bewegen der mobilen Einheiten von dem ersten Zielort zu voneinander entfernt gelegenen individuellen Zielorten, welche individuellen Zielorte vorzugsweise in Versorgungsbereichen der Infrastruktur liegen;
f. Entladen und/oder Beladen der mobilen Einheiten am jeweiligen individuellen Zielort, insbesondere im jeweiligen Versorgungsbereich;
g. gegebenenfalls selbstständiges Bewegen der mobilen Einheiten von den jeweiligen individuellen Zielorten, insbesondere den Versorgungsbereichen, zu dem ersten Zielort oder einem neuen Zielort;
h. gegebenenfalls Herstellen einer lösbaren Verbindung zwischen der zumindest einen mobilen Einheit und dem ersten Fahrzeug und/oder zwischen den mobilen Einheiten.

15. Verfahren zur Regelung eines Speicherstandes der mobilen Einheiten des Systems nach einem der Ansprüche 1 bis 15, umfassend zumindest die folgenden Verfahrensschritte:
a. Antreiben des Systems mittels des ersten Antriebs des ersten Fahrzeugs und/oder mittels eines oder mehrerer der zweiten Antriebe einer ersten Gruppe der mobilen Einheiten;
b. gleichzeitiges Rekuperieren mittels einer oder mehrerer der mobilen Einheiten einer zweiten Gruppe der mobilen Einheiten.

## Geänderte Patentansprüche

### Geänderte Patentansprüche gemäss Regel 137(2) EPÜ.

1. System umfassend zumindest
- ein erstes Fahrzeug, insbesondere ein Land-, Wasser- oder Luftfahrzeug, welches erste Fahrzeug zumindest einen ersten elektrischen Antrieb und eine Kommunikationseinrichtung umfasst, sowie
- mehrere mobile Einheiten, wobei die mobilen Einheiten jeweils einen zweiten elektrischen Antrieb sowie einen Energiespeicher zur Versorgung des zweiten elektrischen Antriebs mit Energie umfassen, und
wobei die Kommunikationseinrichtung dazu ausgebildet ist, Informationen betreffend einen individuellen Zielort an die mobilen Einheiten zu übertragen, und wobei die mobilen Einheiten dazu eingerichtet sind, den individuellen Zielort selbstständig zu erreichen, wobei das erste Fahrzeug für den Transport von mobilen Einheiten ausgebildet ist, und wobei die mobilen Einheiten dazu ausgebildet sind, mittels des ersten Fahrzeugs transportiert zu werden, **dadurch gekennzeichnet, dass** zumindest eine der mobilen Einheiten derart mit dem ersten Fahrzeug verbunden ist, dass eine Versorgung des ersten elektrischen Antriebs mit Energie durch den Energiespeicher der zumindest einen mobilen Einheit ermöglicht ist.

2. System nach Anspruch 1, **dadurch gekennzeichnet, dass** mehrere der mobilen Einheiten derart mit dem ersten Fahrzeug und/oder mit der zumindest einen mobilen Einheit verbunden sind, dass eine Versorgung des ersten elektrischen Antriebs mit Energie durch die Energiespeicher der mehreren mobilen Einheiten ermöglicht ist.

3. System nach einem der Ansprüche 1 bis 2, **dadurch gekennzeichnet, dass** sämtliche der mobilen Einheiten derart mit dem ersten Fahrzeug verbunden sind, dass eine Versorgung des ersten elektrischen Antriebs mit Energie durch die Energiespeicher sämtlicher mobiler Einheiten ermöglicht ist.

4. System nach einem der Ansprüche 1 bis 3, **dadurch gekennzeichnet, dass** die mobilen Einheiten selbst durch zweite Fahrzeuge, insbesondere durch Land-, Wasser- oder Luftfahrzeuge, ausgebildet sind.

5. System nach einem der Ansprüche 1 bis 4, **dadurch gekennzeichnet, dass** die mobilen Einheiten unabhängig vom ersten Fahrzeug oder durch das erste Fahrzeug steuerbar, insbesondere fernsteuerbar, sind, oder dass die mobilen Einheiten durch selbstfahrende Fahrzeuge ausgebildet sind.

6. System nach einem der Ansprüche 1 bis 5, **dadurch gekennzeichnet, dass** die mobilen Einheiten jeweils eine Funktionseinheit umfassen, beispielsweise eine Ladefläche zum Transport von Gegenständen, ein Kühlaggregat, um einen temperaturgeführten Transport von Gegenständen zu ermöglichen, und/oder weitere Energiespeicher.

7. System nach einem der Ansprüche 1 bis 6, **dadurch gekennzeichnet, dass** die zumindest eine mobile Einheit kräfteübertragend mit dem ersten Fahrzeug verbunden ist, und/oder dass mehrere der mobilen Einheiten kräfteübertragend mit dem ersten Fahrzeug und/oder mit der zumindest einen mobilen Einheit verbunden sind, und/oder dass sämtliche der mobilen Einheiten kräfteübertragend miteinander verbunden sind.

8. System nach einem der Ansprüche 1 bis 7, **dadurch gekennzeichnet, dass** das erste Fahrzeug durch ein Zugfahrzeug und die mobilen Einheiten durch Anhänger ausgebildet sind.

9. System nach einem der Ansprüche 1 bis 7, **dadurch gekennzeichnet, dass** das erste Fahrzeug durch ein Schienenfahrzeug und die mobilen Einheiten durch Landfahrzeuge ausgebildet sind.

10. System nach einem der Ansprüche 1 bis 7, **dadurch gekennzeichnet, dass** das erste Fahrzeug durch ein Schiff und die mobilen Einheiten durch Landfahrzeuge ausgebildet sind.

11. System nach einem der Ansprüche 1 bis 10, **dadurch gekennzeichnet, dass** das erste Fahrzeug keinen Energiespeicher zur Versorgung des ersten elektrischen Antriebs aufweist.

12. System umfassend zumindest ein erstes Gebäude mit zumindest einer Kommunikationseinrichtung sowie mehrere mobile Einheiten, welche mobilen Einheiten dazu eingerichtet sind, über die Kommunikationseinrichtung gesteuert zu werden, wobei die mobilen Einheiten jeweils einen zweiten elektrischen Antrieb sowie einen Energiespeicher zur Versorgung des zweiten elektrischen Antriebs mit Energie umfassen, **dadurch gekennzeichnet, dass** die mobilen Einheiten zu bedarfsabhängigen Einheiten aus mehreren mobilen Einheiten zusammengeschlossen und als Einheit bewegt werden können.

13. Verfahren zur Versorgung einer Infrastruktur unter Verwendung des Systems nach einem der Ansprüche 1 bis 12, umfassend zumindest die folgenden Verfahrensschritte:
a. Beladen des ersten Fahrzeugs und/oder einer, mehrerer oder sämtlicher der mobilen Einheiten mit Gütern und/oder Energie;
b. Herstellen einer lösbaren Verbindung zwischen der zumindest einen mobilen Einheit und dem ersten Fahrzeug und/oder zwischen den mobilen Einheiten;
c. Bewegen des ersten Fahrzeugs und/oder der mobilen Einheiten zu einem ersten Zielort, welcher erste Zielort vorzugsweise in einem Eintrittsbereich der zu versorgenden Infrastruktur liegt;
d. Lösen der Verbindung zwischen der zumindest einen mobilen Einheit und dem ersten Fahrzeug und/oder zwischen den mobilen Einheiten;
e. Selbstständiges Bewegen der mobilen Einheiten von dem ersten Zielort zu voneinander entfernt gelegenen individuellen Zielorten, welche individuellen Zielorte vorzugsweise in Versorgungsbereichen der Infrastruktur liegen;
f. Entladen und/oder Beladen der mobilen Einheiten am jeweiligen individuellen Zielort, insbesondere im jeweiligen Versorgungsbereich;
g. gegebenenfalls selbstständiges Bewegen der mobilen Einheiten von den jeweiligen individuellen Zielorten, insbesondere den Versorgungsbereichen, zu dem ersten Zielort oder einem neuen Zielort;
h. gegebenenfalls Herstellen einer lösbaren Verbindung zwischen der zumindest einen mobilen Einheit und dem ersten Fahrzeug und/oder zwischen den mobilen Einheiten.

14. Verfahren nach Anspruch 13, umfassend zumindest die folgenden Verfahrensschritte:
a. Antreiben des Systems mittels des ersten Antriebs des ersten Fahrzeugs und/oder mittels eines oder mehrerer der zweiten Antriebe einer ersten Gruppe der mobilen Einheiten;
b. gleichzeitiges Rekuperieren mittels einer oder mehrerer der mobilen Einheiten einer zweiten Gruppe der mobilen Einheiten.
